# EUROPEAN PATENT APPLICATION

(11) **EP 1 389 571 A1**
(43) Date of publication of application: **18.02.2004**
(21) Application number: 02078526.7
(22) Date of filing: 27.08.2002
(51) Int. Cl.: B60T 11/16

(54) **Method for manufacturing a master cylinder for a brake system, and cylinder manufactured therewith**

(30) Priority: 12.08.2002 US 217132
(71) Applicant: Neuman Metal Forming Netherlands B.V., 8024 AA Zwolle (NL)
(72) Inventor: Koekenberg, Leonardus Gerhardus Plechelmus, 8033 DT Zwolle (NL); Alferink, Henricus Johannes Maria, 8102 LJ Raalte (NL); Jongstra, Geert Jan, 8325 EK Vollenhove (NL)
(74) Representative: Prins, Adrianus Willem

(57) **Abstract**

A method for manufacturing a master cylinder for a brake system, comprising a cylindrical main body, at least one flange integrally connected therewith, and a bore, extending in the cylindrical main body and through said at least one flange, wherein the master cylinder is manufactured by cold forging.

Preferably the flange is cold forged by upsetting. Subsequently the cylindrical main body is provided with a bore. Said bore is realized in a series of forging steps, wherein at least the portion where the bore pierces the flange is executed in a separate step.

## Description

The invention relates to a method for manufacturing a master cylinder for a brake system, comprising a cylindrical main body, at least one flange integrally connected therewith and a bore, extending in the cylindrical main body and through said at least one flange.

Such cylinders are well known from the prior art. They can be used in brake systems in for instance the automotive or machine building industry and are commonly manufactured by die-casting or injection moulding. These manufacturing methods offer a large freedom to the designers and relative ease of manufacturing. However, the cylinders manufactured with these methods do not always satisfy the criteria set by the manufacturers or users. For instance, the known methods may lead to surface problems, caused by inclusions, cavities or pores and the like. These irregularities may for instance arise due to gas entrapped in the melted material or shrinkage of the material during cooling down. These surface irregularities, especially when occurring in the bore, may hinder smooth travelling of a piston within the cylinder, causing excessive wear, malfunctioning or early failure. Furthermore, the inclusions and cavities affect the homogeneity of the cylinder and may induce local peak stresses. These peak stresses may accelerate the formation of hair cracks and, ultimately, lead to failure of the product. Also, when the pores or cavities form a continuous chain, leakage may occur.

The present invention has as a main object to provide a method for manufacturing cylinders according to the preamble of claim 1, with which at least a number of the problems related to the known cylinders and manufacturing methods can be avoided. To this end a method according to the present invention is characterized by the features of claim 1.

By manufacturing the cylinders by cold forging no inclusions, pores or other irregularities are formed. Hence, disadvantages associated therewith can be avoided, such as surface problems, porosity, excessive wear, local stress points, hair cracks and the like. The inner surface of the cylinder will be sufficiently smooth for cooperating wit a piston in a hydraulic system such as a breaking system or machinery.

Additionally, cycle times can be relatively short, since the product needs no cooling down time, and product precision can be high, *inter alia* since no substantial shrinkage does take place. Also, if carried out properly, cold forging enables efficient use of material, since little excessive material will have to be removed afterwards.

Although cold forging is a well known method for manufacturing metal products, until now this method has not been used for the manufacturing of products of the above-described type, that is cylinders having a cylindrical main body and a flange, wherein a bore in the main body is relatively long and extends through the flange, and wherein on top of that, the cylindrical main body often (but not per se) has an asymmetric cross section.

Surprisingly it has been found that, although in a method according to the present invention the forces acting on the material and tools during cold forging may be at least partly asymmetric due to the asymmetry and/or different wall thickness of the product, the material flow can be controlled satisfactory and a cylinder of the above-described type can be successfully manufactured by breaking down the forging process in a series of consecutive steps, each making use of an especially adapted set of forging tools.

In a preferred embodiment, a method according to the present invention is characterized by the features of claim 4.

By forging the flange prior to the forging of the bore, defects in the cylinder wall can be prevented. If the order would be reversed the flange would, due to the relatively large amount of material needed to form said flange, draw material away from the cylinder wall, leaving this wall dented, especially in the region near the flange.

More generally speaking, the part of the cylinder taking up a relatively large amount of material (in the present embodiment the flange) should be forged first, to prevent such part from suctioning material away from other, smaller parts of the cylinder, which would leave these parts with a shortage of material. It should therefore be understood that in an alternative embodiment of a cylinder according to the invention, wherein the flange accounts for a smaller material percentage of the total product, the forging order as recommended in claim 4 could be reversed.

Preferably, the step of forging the flange and the step of forging a bore in the cylindrical main body each are subdivided in a series of substeps. These substeps can be chosen such, that the asymmetry of the force distribution on the material and forging tools is kept within acceptable boundaries at each step and the material flow will be such that substantially no undesirable stresses will remain in the final product obtained. In this way, the forging process can be broken down in as many substeps as necessary, to obtain at each step a controlled and preferably substantially symmetric material flow, regardless of the shape of the final product to be manufactured.

In further elaboration, a method according to the present invention is characterized by the features of claim 8.

By realizing the bore in several steps, asymmetric forces acting on the forging tool due to the asymmetric cross section of the cylindrical part and/or different wall thickness, can be limited to an acceptable level. As a result, warpage of said tools can be minimized, preferably avoided altogether.

Moreover, the tool may be profiled such that during forging the tool will be forced in a specific direction, which is opposed to the warpage direction. Thus, warpage can be compensated for. The profile may for instance comprise a chamfered edge, extending along a portion of the free end of the tool. Such profile may particularly be advantageous during the last stage of the making of the bore.

Since the piercing of the flange constitutes a critical step in the realisation of the bore, this is preferably executed in a separate step. By doing so the risk of initiating flowing defects and/or cracks can be minimized.

In a highly advantageous embodiment, a method according to the present invention is characterized by the features of claim 9 or 10.

Forging the flange and possibly a part of the cylindrical main body extending at one side of said flange by upsetting offers the advantage that relatively large deformation ratios are attainable, meaning that the surface of the flange can be large with regard to the thickness thereof.

Alternatively, if the deformation ratio for realizing the flange is relatively low, the flange could also be cold forged by radial extrusion, wherein pressure is applied on two opposite sides of the material.

In a further advantageous embodiment a method according to the present invention is characterized by the features of claims 11, 12 and/or 13.

By subjecting the material to one or more appropriate treatments before, during and/or after the cold forging process, desired properties of the material may be enhanced. For instance, the formability of the material can be improved by subjecting the material to a softening operation. Also, hardness and wear resistance may be enhanced by subjecting the final product to an annealing operation.

Preferably, the product and/or tools are lubricated before one or each forging step, to facilitate the forging process, ease the material flow and protect the contact surfaces of the tools and the product. When using a transfer press, wherein all consecutive forging steps are executed directly after each other, it suffices to lubricate the product only once, prior to the first forging step. The lubricant will retain its beneficial function throughout all subsequent forging steps.

The invention furthermore relates to a master cylinder, substantially manufactured by cold forging, according to the features of claims 13-16. The chance of such a cold forged master cylinder having pores or other inclusions will be minimum if not zero. Therefore, such cylinder will be substantially free of leakage and the inner side of the cylinder will be or can easily be made smooth, ensuring good functioning of the piston.

The invention furthermore relates to a set of cold forging tools for use in a method according to the present invention.

Further advantageous embodiments of a method, a master cylinder and a set of forging tools according to the present invention are given in the subclaims.

To explain the invention, exemplary embodiments of a method according to the present invention will hereinafter be described with reference to the accompanying drawings, wherein:
Figs. 1A-B show in plan view, longitudinal cross section and transverse cross section a master cylinder for a brake system, manufactured by cold forging according to the invention;
Fig. 2A shows a die for use in a cold forging method according to the present invention for manufacturing the product shown in Fig. 1;
Fig. 2B shows six punches for cooperation with the die according to Fig. 2 in six consecutive steps of a cold forging method according to the present invention; and
Fig. 3 shows a slug from which the cylinder of Fig. 1 can be cold forged.

In this application, the term cold forging is used for all processes wherein a material, in particular a metal, is subjected to such high pressures that it becomes sufficiently plastic to flow at room temperature, at least a temperature below the recrystallisation temperature of the material concerned.

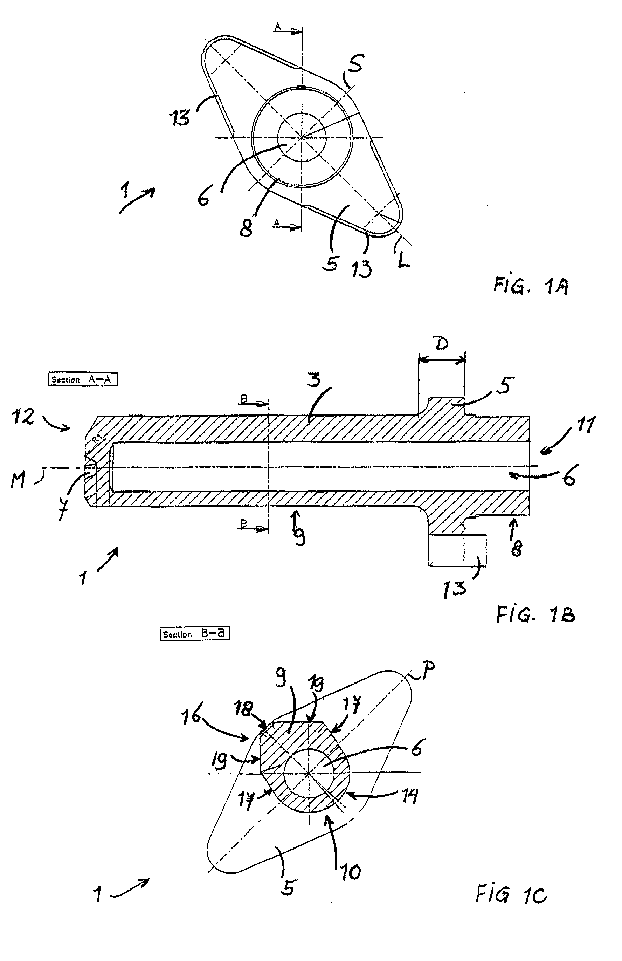

Figs. 1A-C show a typical example of an asymmetric product 1 which can be manufactured by cold forging, according to the present invention. The product 1 represents a master cylinder of a brake system for application in for instance the automotive or machine building industry. The master cylinder comprises a cylindrical main body 3, provided with a bore 6, extending longitudinally from a first end 11 of the main body 3 towards an opposite end 12, having a constant circular cross section along its entire length. Near the first open end 11 a flange 5 is integrally connected with the outer periphery of the main body 3.

As seen from Fig. 1B, flange 5 divides the main body 3 into two cylinder parts 8, 9, each having a different cross section. The first cylinder part 8, adjacent the open end 11, has a circular cross section, situated concentric with regard to the bore 6. The other cylinder part 9, adjacent the bottom end 12, has an asymmetric cross section 10, including a half-circular section 14, concentric with bore 6, and a polygonal section 16, as best seen in Fig. 1C. The polygonal section 16 comprises two substantially parallel first sides 17, extending from the half-circular section 14 in an almost tangential direction, a second side 18 extending substantially parallel to an (imaginary) intersecting plane P between the circular and the polygonal section 14, 16 and two third sides 19, which taper from the first sides 17 towards the second side 19, each enclosing a different obtuse angle with the respective first side 17. Hence, the wall thickness of cylinder part 9 varies considerably and in an asymmetric way along the circumference of the bore 6.

The flange 5 is substantially diamond-shaped, with rounded corners. The top surface of the flange 5, that is the surface facing the open end 11 of the main body 3, is provided with a raised ridge 13, surrounding both acute corners of the diamond. The function thereof will become clear further on.

The flange 5 is positioned symmetrically with respect to bore 6 and the first cylinder part 8 (see Fig. 1A), such that the centre of the flange 5 (defined by the intersection of its two diagonals L, S) coincides with the centre line M of the bore 6. With regard to the second cylinder part 9, the flange 5 is positioned in such way that its longest diagonal L lies within the intersection plane P of the circular and polygonal contour sections 14, 16. The flange 5 is dimensioned such that the second side 18 of the second cylinder part 9 substantially lies flush with one of the obtuse corners of the flange 5, as seen in Fig. 1C.

Furthermore, bottom end 12 of the main body 3 has a bevelled edge and is provided with a tapering hole 7, the centre line thereof being aligned with the centre line M of bore 6.

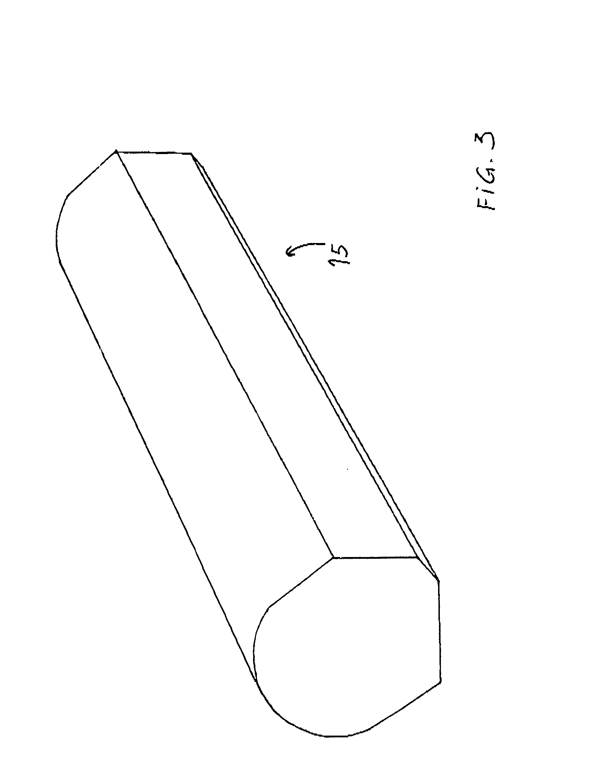

The product as shown in Figs. 1A-C has been cold forged from a solid bar-shaped piece of starting material, hereinafter referred to as a slug 15, illustrated in Fig. 3. This slug 15, in the present case, has a constant outer periphery that resembles the one of the second cylinder part 9 but is of slightly smaller dimension, to prevent the slug 15 from scraping the cold forging tools, as will be discussed in more detail below. The slug 15 may for instance be manufactured by sawing a profiled pressed bar at a desired length. The length of each slug 15 is chosen such that the total material volume of the slug 15 equals the material volume of the product 1 to be manufactured.

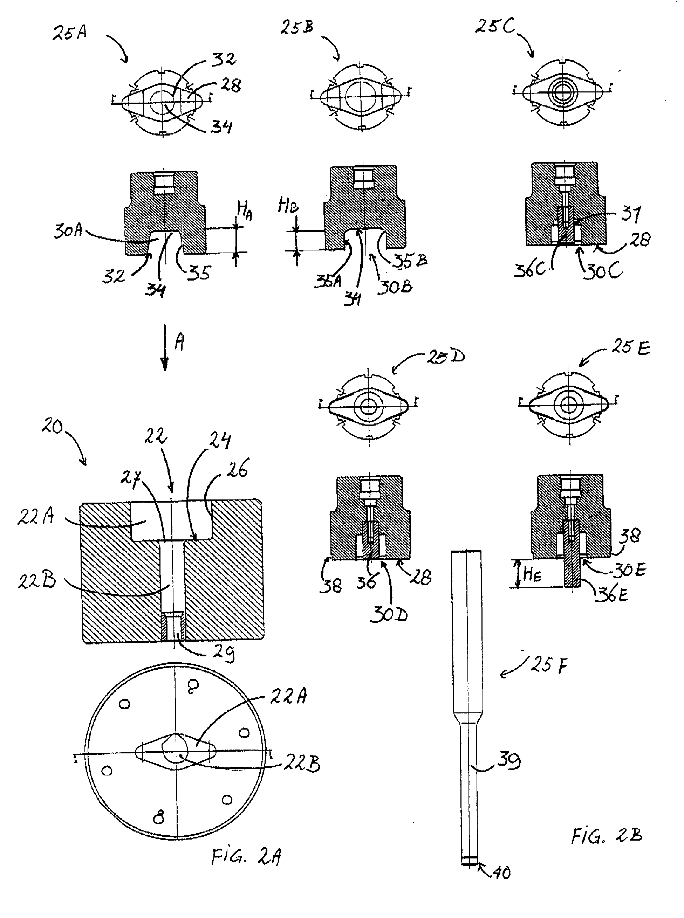

The tools needed for cold forging the slug 15 into the product 1 shown in Figs. 1A-C will now be described with reference to Fig 2A and B wherein the same or corresponding parts are indicated by the same or corresponding reference numerals.

A set of cold forging tools generally comprises a die and an accompanying punch and may further comprise an ejector and a stripper, both intended for removing the forged product from aforementioned die and/or punch. The tools are mounted in a press, which can be of any suitable type known in the art, such as for instance a horizontal or vertical, hydraulic or mechanical type of press. As such presses are widely known, further description thereof is not necessary.

In Fig. 2A a die 20 is shown in plan view and in cross sectional view. The die 20 comprises a cavity 22, having an inner contour that largely corresponds to the outer contour of the product 1 to be manufactured, at least a substantial part thereof. The cavity 22 comprises a first portion, hereinafter referred to as the flange-forming cavity 22A, having a diamond-shaped bottom 24, surrounded by an upright, circumferential sidewall 26. The dimensions of the bottom 24 are similar to those of the flange 5. Provided in the bottom 24 is an opening 27, which opens into a second portion of the cavity 22, hereinafter referred to as the main body forming cavity 22B. This portion 22B has an inner cross section that matches the outer contour of the second cylindrical part 9 of the product 1 to be manufactured. The cavity 22 is open at its upper end, for receiving a slug 15, and at its opposite, lower end, for receiving an ejector 29, for discharging the slug 15 from the cavity 22, after being cold forged.

The die 20 can cooperate with several punches, in the present case six punches 25A-F, as shown in Fig. 2B, for performing six successive steps in the cold forcing method according to the present invention.

The first five punches 25A-E are provided with an outer contour which matches the inner contour of the flange-forming cavity 22A, as defined by the upright circumferential sidewall 26. A bottom side 28 of the punches 25A-E is provided with a recess 30A-E for forming the first symmetrical cylinder part 8 of the product 1.

The recess 30A of the first punch 25A has a hexagonal access opening 32, a smaller circular top wall 34 and a circumferential sidewall 35 which tapers from the access opening 32 towards the top wall 34.

The second punch 25B has a similar outer contour and a recess 30B with a hexagonal access opening 32 and a circular top wall 34, similar to those of the first recess 30A, but of slightly increased dimensions, and a circumferential sidewall 35, which starts with a first part 35A extending substantially perpendicular to the access opening 32 and ends with a second part 35B, tapering towards the top wall 34. Although not illustrated in Fig. 2B, a comparable tapering wall part 35B could be incorporated in the recess 30A of the first punch 25A. The maximum depth H_{B} of the second recess 30B is slightly smaller than that of recess 30A.

The third punch 25C again features the same outer contour as the previous two punches 25A,B and furthermore comprises a recess 30C, which largely matches the outer contour of the first cylinder part 8 (see fig. 1B). The recess 30C has a circular cross section, which is reduced twice towards its top wall 34. From said top wall 34, a rod shaped core 36, having a circular cross section, extends concentric within the recess 30C. A free end thereof lies substantially flush with the bottom side 28 of the punch 25C.

The fourth punch 25D is provided with a groove 38 of superficial depth, extending from the bottom side 28 around the acute corners of the diamond. Recess 30D largely corresponds to recess 30C. However the reduction 31, adjacent the top wall 34 is removed and the depth of recess 30D is larger than the depth of recess 30C.

The fifth punch 25E largely corresponds to the fourth punch 25D. However the core 36E is elongated to extend beyond the bottom side 28 of the punch 25E, over a predefined distance H_{E} which at least equals the thickness D of the flange 5 (as indicated in Fig. 1B), for reasons to be explained below.

The sixth punch 25F finally comprises a rod-shaped portion 39, having a constant circular outer contour, which corresponds to the inner contour of bore 6. The free end of the rod 39 is provided with an at least partly chamfered edge 40.

The tools previously described can be used in following way. Firstly, die 20 and the first punch 25A are mounted in the press. Then, the slug 15 is placed into the cavity 22 of die 20. Because the outer contour of the slug 15 is slightly smaller than that of the cavity 22, the slug 15 can be inserted without damaging, that is scraping the sidewalls of the cavity 22. The depth of the cavity 22 is dimensioned such that an upper part of the inserted slug 15 will extend in the flange-forming portion 22A. Next, the press is operated to move punch 25A towards the die 20, in the direction of arrow A (Fig. 2A), into the flange-forming portion 22A. Due to the high pressures applied, the stress in the slug 15 will exceed the yield point of the material, as a result of which the material will deform plastically and start to flow, thus filling the space between the die 20 and the punch 25A. The punch 25A is than retracted towards its initial position and exchanged for the second punch 25B. These steps are repeated for all six punches 25A-F, after which the product 1 will have attained its final shape, as illustrated in Figs 1A-C.

In above-described way, the first three punches 25A-C will, in cooperation with the flange-forming cavity 22A of die 20 form the flange 5 of the product 1 by upsetting an upper part of the slug 15, in three consecutive steps. Simultaneously, first cylinder part 8 is formed, on top of the flange 5, by means of the recesses 30A-C in the punches 25A-C. The tapered second part 35B of the circumferential sidewall 35 of recess 30B (and of recess 30A, in case provided) contributes to direct the material flow in a desired direction.

In the third step, the first cylinder part 8 is provided with a bore 6. And with the fourth punch 25D, the cylinder part 8 is extruded to its final length. During this step, excessive material from the previous step or steps may be discarded into groove 38 along the outer contour of the fourth punch 25D. This will result in the forming of ridge 13 on the flange 5 of the final product (see Fig. 1A,B). The ridge 13 therefore forms no functional part of the cylinder 1 but merely serves as an overflow for excessive material during the fourth and possible subsequent steps of the forging process.

With the fifth punch 25E the bore 6 in the first cylinder part 8 is extended, at least till beyond flange 5. This is a critical step in the formation of the bore 6, since during this step, the flange 5 is pierced, which may initiate undesired material flows between the flange and main body. To minimize these side effects, which could cause flow defects in the final product, the fifth step is limited to merely extend the bore 6 to just passed the flange 5. Subsequently, the bore 6 may be completed to its final length in a sixth step, by means of the sixth punch 25F. At the same time the second cylinder part 9 is extruded to its final length, using material expelled from the bore 6. For this sixth step, a different die 20' (not shown) may be provided, which can cater for the increase in length of the cylinder part 9. Furthermore, the chamfered edge 40 of the punch 25E assists in directing the punch in a specific direction to counteract warpage caused by resultant forces on the punch, due to the asymmetric cross section of the second cylinder part 9.

By applying above-described cold forging method, products with complex, asymmetric cylindrical shapes, a flange and a bore extending through said flange can be successfully manufactured. Inclusions, pores, moulding seams or other irregularities which may occur with other known manufacturing techniques can be minimized. Furthermore, short cycle times can be effected as well as accurate product dimensions and efficient use of material since little or no material has to be removed. Also, the resulting product may have a favourable, homogeneous material structure, wherein fibers extend along substantially the entire length of the cylinder with few or no interruptions.

By splitting up the forging process in a suitable number of steps, each contributing to part of the total deformation process with specially designed tools, the deformation process and occurring material flows can be accurately controlled, thereby ensuring the material being properly distributed, even with highly asymmetric products, and avoiding build up of undesired internal stresses.

Figs. 1A-C show the product in its rough shape, directly coming from the cold forging process. It will be clear that the product may be subjected to follow up treatments known in the art, in order to provide the product with desired properties. For instance, attachment holes may be drilled in the flange 5. Certain surfaces of the product 1, for instance the bore 6 or the topside of the flange 5 may be machined to meet certain surface criteria. Also the ridges 13 may be removed. The product 1 may be annealed to enhance its strength and wear resistance.

Besides or instead of above-mentioned follow up treatments, the product may be treated prior to each or certain forging steps. Preferably, the product is lubricated prior to each step. Furthermore, the product may be softened prior to each or certain forging steps, whereby the product is heated to soften the material and improve its deformability, so that the necessary forging pressure can be decreased.

It is to be understood that the above-described product represents only one example of a product that can be manufactured with a cold forging method according to the invention. Within this product, many variations are feasible. For instance, the cross section of the cylindrical part may have a different outer contour. The position of the flange 5 may vary, for instance be positioned nearer to the bottom end 12 of the main body 3 than currently shown. Furthermore, the orientation of the flange 5 may be rotated with respect to the centre line M of the bore 6. Also the shape of the flange 5 can differ. For instance, the flange 5 may have a non-rotation symmetric or even an asymmetric shape, for instance by extending in only one radial direction from the main body 3.

The method may furthermore be successfully applied to other products, having a cylindrical portion of highly asymmetric design and varying wall thickness, combined with a flange portion, which may equally be of asymmetric design. By dividing the forging process in appropriate steps, such products can be manufactured by cold forging.

Furthermore, the forging process can be divided in more or less steps than the six steps shown. Generally, the number of necessary steps will be closely related to amongst others the complexity of the shape to be manufactured and the mechanical properties of the material.

Instead of or besides the punch, the die may be exchanged as well, at every step or at some specific steps only. Automatic transfer means may be provided to transfer the (intermediate) product between successive steps and associated tools.

These and many variations are considered to fall within the scope of the invention as outlined by the claims.

## Claims

1. A method for manufacturing a master cylinder for a brake system, comprising a cylindrical main body, at least one flange integrally connected therewith, and a bore, extending in the cylindrical main body and through said at least one flange, wherein the master cylinder is manufactured by cold forging.

2. A method according to claim 1, wherein the cylinder is cold forged to its final desired shape in a series of consecutive steps, each step making use of a different set of forging tools.

3. A method according to claim 1 or 2, wherein the cylinder is cold forged from a pressed, substantially massive slug, having a material volume that equals that of the cylinder to be manufactured, and an outer circumference, which substantially corresponds to the outer circumference of the cylindrical main body.

4. A method according to any one of claims 1-3, wherein the flange is cold forged first and subsequently the cylindrical main body is provided with the bore and extruded to its final, desired length.

5. A method according to any one of claims 1-3, wherein part of the cylindrical main body is cold forged at least partly concurrent with the flange.

6. A method according to any one of the preceding claims, wherein the flange is cold forged in several consecutive steps.

7. A method according to any one of the preceding claims, wherein the bore is cold forged in several consecutive steps.

8. A method according to any one of the preceding claims, wherein the flange extends at some distance of each end of the cylindrical main body and the bore is cold forged in three consecutive steps, wherein during the first step a first portion of the bore is realised extending from one end of the main body up to the flange, during the second step a second portion of the bore is realised extending from the first portion to beyond the flange, thus piercing the flange and during the third step the bore is completed, ending at some distance from the opposite end of the cylindrical main body.

9. A method according to any one of claims 3-8, wherein the flange is cold forged by upsetting an end of the slug.

10. A method according to claim 9, wherein a part of the cylindrical main body, which part extends beyond the flange, at a top side thereof, is forged at least partly together with the flange, by upsetting an end of the slug.

11. A method according to any one of the claims 3-10, wherein the slug prior to the first and/or a subsequent forging step is subjected to a treatment, enhancing the formability of the material, for instance a softening operation.

12. A method according to any one of the claims 3-11, wherein the slug is lubricated, preferably prior to each forging step.

13. A method according to any one of the preceding claims, wherein the product, after having been cold forged, is subjected to a follow-up treatment, for instance annealing.

14. A master cylinder for a brake system, substantially manufactured by cold forging, wherein the cylinder comprises an asymmetric, cylindrical main body and at least one flange integrally formed therewith, situated eccentric with respect to a mass centre line of the main body.

15. A master cylinder according to claim 14, wherein the at least one flange extends substantially perpendicular to a centre line of the main body and is of non-rotation symmetric shape.

16. A master cylinder according to claim 14 or 15, wherein the main body has at least two different cross sections along its length, at least one thereof having an asymmetric shape.

17. A master cylinder according to any one of claims 14-16, wherein the cylinder is made of aluminium or an aluminium alloy.

18. A set of cold forging tools for use in a method according to any one of claims 1-13.

19. A set of cold forging tools according to claim 18, comprising at least one die and a series of mating punches, which punches can alternately cooperate with said at least one die during consecutive cold forging steps.
